# EUROPEAN PATENT SPECIFICATION

(11) **EP 3 587 797 B1**
(45) Date of publication and mention of the grant of the patent: **04.08.2021**
(21) Application number: 19425046.0
(22) Date of filing: 27.06.2019
(51) Int. Cl.: F03D 1/04, F03D 1/06

(54) **ELECTRIC TRANSPORTATION MEANS COMPRISING A WIND GENERATOR**
ELEKTRISCHES TRANSPORTMITTEL MIT WINDGENERATOR
MOYEN DE TRANSPORT ÉLECTRIQUE COMPRENNANT UNE ÉOLIENNE POUR LA PRODUCTION D'ÉNERGIE ÉLECTRIQUE

(30) Priority: 28.06.2018 IT 201800006744
(43) Date of publication of application: 01.01.2020
(73) Proprietor: Turbo Power System S.r.l., 00195 Roma (RM) (IT)
(72) Inventor: Fava, Aldo, 01014 Montalto di Castro (VT) (IT); Bembic, Zivana, 01014 Montalto di Castro (VT) (IT)

(56) References cited:
- WO-A1-2009/092191
- WO-A1-2011/011856
- AU-A1- 2012 200 636
- CN-A- 101 660 495
- CN-Y- 201 050 449
- FR-A1- 2 465 898
- JP-U- S57 158 517

## Description

The present invention regards the field of renewable energy, and related applications to the transportation means. More in particular, we make reference to: electro-mechanical instruments for production of energy from renewable sources; electric generators activated by the wind; wind generators having a rotating axis that is quite parallel to the air flow entering into the rotor; electric generators for power supply and propulsion of electric transportation means; hybrid systems of wind-photovoltaic energy for production of electric energy.

As known, sources of renewable energy are being used more frequently for production of electric energy. Nowadays, in the field of renewable energy there is a significant interest in the conversion of wind energy to electric energy.

The state of the art comprises now some general devices, or models, being represented by a wind generator, or a wind turbine having an horizontal axis, properly used in order to transform kinetic energy to electric energy.

Usually, the wind generators are of different types: that having a vertical axis, and that having a horizontal axis. The wind generators having a horizontal axis are now more common than that having a vertical axis. In some cases, they include a vertical supporting structure.

Different types of wind generators, having a horizontal axis, are known from the state of the art. Usually, they are applied to the production of electric energy to be transmitted to the electric network of the national provider, but they are not applied to propulsion pr power supply of motors or systems installed on transportation means, as in example: car vehicles, motor vehicles, bicycles, rail vehicles, water vehicles, air vehicles, etc. Some technical problems are solved by some of the known generators: in example, some of them solve the problem of interruption in the generation of energy by using a double horizontal axis. Some other wind generators known from the art disclose solutions in the technical-constructive features of the turbines, or of the horizontal or vertical axis, singularly or in combination each other. Some other systems include some specific electronics in order to increase the performance in the rotary motion. A system according to the prior art is described in document WO 2011/011856.

However, there are still some important drawbacks in the application of wind generators to motors or to power supply of transportation means:
- the transformation of kinetic energy, generated by friction of air on the outer surfaces of a mean, requires complex and precise electronic control equipment, that does not allow to achieve simple systems for the generation of electric energy to be used for propulsion of means;
- considering the speed of vehicles (and similar transportation means) that is highly variable, the wind generators for production of electric energy are not used in order to power supply electric motors or other devices on the same means;
- usually, some systems for generation of electric energy can be applied to the transportation means, and the systems have as a source of energy: the motion of the wheels in the same means; the internal combustion engine (oil, diesel, gas, etc.), as in case of means having a hybrid supply; other processes as the friction of brakes on the wheels, or that generated by the contact on surfaces; or additional sources;
- in all the above cases, it is not possible to avoid a lack in production and saving of energy, due to the non continuous use of said devices or systems, with a consequence not efficient process of production of electric energy; and that probably represents the worst drawback of a wind generator having a horizontal axis.

Therefore, the present invention overcomes all the drawbacks of the solutions disclosed from the prior art, and the main objective is to propose a wind generator for transformation of kinetic energy of an air flow, moving in respect to the outer surface of transportation means, to kinetic energy of a rotating wind turbine having a horizontal axis, leading to a consequent transformation of kinetic energy to electric energy, by using an electric generator; the energy produced is available either to save electric energy (in batteries) and to provide propulsion of means (electric engines).

Another objective is that the device is composed of an innovative combination of:
- some elements that are known from the state of the art, being of common use on the market: air conveyor or shell; ogive; electric generator; electric accumulator; electric connecting cables; anchorage supports,
- and innovative and original elements: air conveyor comprising oval-shaped nozzles; turbine having a rotary horizontal axis; an innovative shape and conformation of the wind turbine blades; their innovative combination.

Another further objective is the generation of a constant, continuous and potentially unlimited energy; the impact of air on the turbine that has been properly installed on the outer surface of the transportation mean (car vehicle, motor vehicle, bicycle, rail vehicle, water vehicle, air vehicle, etc.), by penetration of air into the air conveyor, causes a rotary motion of the turbine blades, producing a constant kinetic energy, that is transmitted to an electric generator, installed at the rear part of the general device.

Another objective is to avoid the problem of interruption, discontinuity and insufficient production of energy, considering that the constant friction of air generated by the vehicle in motion activates the turbine according to a force that is proportional to the speed of the vehicle, and at the same time permits to achieve a significant energetic autonomy, either in propulsion and for other electric and/or electronic systems necessary for a proper functioning;

Another further objective is that the turbine presents a particular design and shape, and a strength of materials used to be constructed, so that to achieve a generation of kinetic energy as an effect of the rotary motion of the blades; in fact the efficiency of energy production in the wind generator depends on the characteristics in the turbine and, in particular, on the technical specifications of the blades belonging to the same turbine.

Therefore, it is specific subject of the present invention an electric transportation means according to claim 1.

The present invention, when compared to similar known devices, is characterized by a series of further advantages, as in example:
- it permits to produce energy from renewable sources, without any emissions and/or pollution;
- it permits to produce energy even at slow velocity of the vehicle on which it is installed;
- it permits a significant decrease of costs: a "zero-cost" energy;
- it allows the use of electric propulsion engines using a clean energy;
- it develops and increases the market of clean energy, according to the concept of *smart city.*

The present invention is now being described according to non-limiting examples, with particular reference to the figures of the enclosed drawings, where:
**Figure 1** is a front/right perspective view of a wind generator according to the present invention, in an assembled configuration;
**Figure 2** is a front/right perspective view of the same wind generator of **Figure 1****,** in a disassembled configuration where the single components are visualized in detail;
**Figure 3** is a top perspective view of a single component of the generator of Figure 1, represented by a wind turbine;
**Figure 4** is a front view of the same wind turbine of **Figure 3****;**
**Figures 5a and 5b** are respective front views of the same wind turbine of **Figures 3 and 4****,** with details of the blades, measures and angles;
**Figures 6a and 6b** are respective front and lateral views of details of one of the blades, belonging to the same wind turbine of **Figures 3 and 4****;**
**Figure 7** is a lateral perspective view of the same wind turbine of **Figures 3 and 4****;**
**Figure 8** is a lateral perspective view of the same wind turbine of **Figure 1****,** in a disassembled configuration where the single components are shown in detail;
**Figure 9** is a front/right perspective view of the same wind turbine of **Figure 1****,** in a disassembled configuration where the single components are shown in detail.

It is underlined that only few of the many conceivable embodiments of the present invention are here described, which are just some specific non-limiting examples, having the possibility to describe many other embodiments based on the disclosed technical solutions of the present invention.

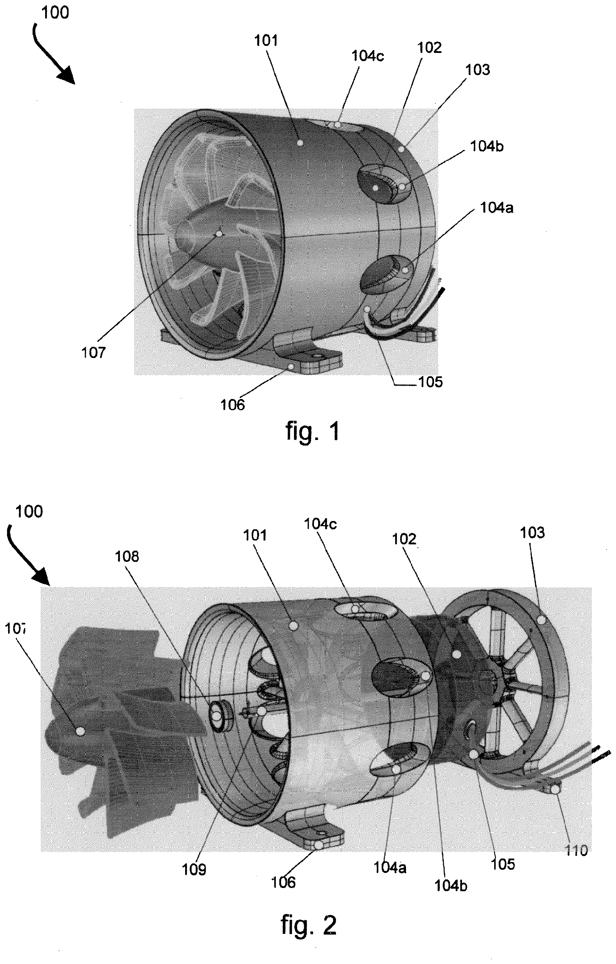

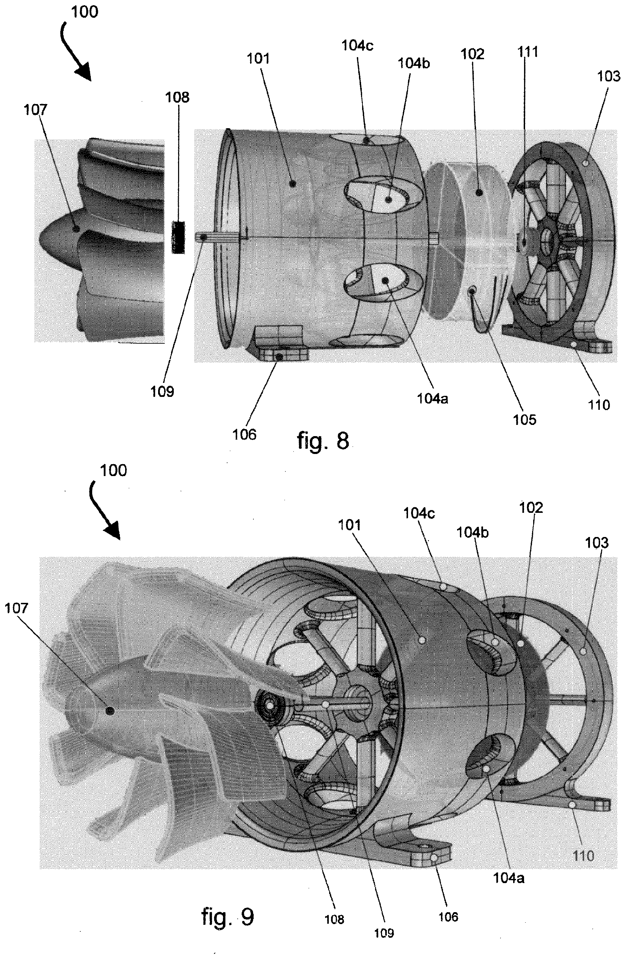

**Figures 1, 2****,** **8 and 9** show a wind generator **100,** having a horizontal axis, according to the present invention. It can be installed in electric transportation means that can be of different types, as: car vehicles, motor vehicles, rail vehicles, water vehicles and air vehicles.
The wind generator **100** comprises an air conveyor **101** inside which all the other main components are contained, represented by a horizontal wind turbine **107** connected to a transmission axis **109,** that is connected in turn to an electric generator **102.**
The air conveyor, called shell **101,** has a cylindrical shape that is empty inside, having some openings on the outer surface, so called oval-shaped nozzles **104a, 104b,** ....
The air conveyor **101** includes said oval-shaped nozzles **104a, 104b,** ..., having a two dimensional shape that is elliptical and three dimensional conic, that can have different number and size, and can be placed in different positions according to specific needs. Inside the conveyor **101,** approximately in the middle of its cylindric surface, an element is installed, having 8 arms, that supports a central cylinder, inside which said horizontal rotary axis **109** with turbine **107** is installed.
The horizontal wind turbine **107** comprises a rotary group of wind blades **112a, 112b,** ..., fixed to a union ogive **116.**
The transmission axis **109** is rotating and horizontal, where said turbine **107** is installed with its respective ogive **116** placed at the front part of said axis **109** and where an electric generator **102** is installed at the rear part of said axis **109,** through a rotary element of said electric generator **102,** so that a rotation of turbine **107** is transmitted, through a rotation of axis **109,** to the rotary element of the electric generator **102.**
The electric generator **102,** comprises a rotary element and a fixed element, that is connected to the wind turbine **107** through the transmission axis **109;** the electric generator **102** is further connected, by using electric cables **105,** to some external electric accumulators.
The wind generator **100** further comprises at least two ball bearings **108, 111,** anchoring, through connection elements, said rotary transmission axis **109** together either with the wind turbine **107** and the electric generator **102,** in a stable position inside said shell **101,** at the same time allowing the rotary motion of said rotating axis **109** on itself.
The wind generator **100** further comprises a cover **103** closing the rear part of said shell **101,** and at least two supporting elements **106, 110,** placed on the outer surface of said shell **101,** in order to achieve an anchorage of the wind generator **100** to the transportation means on which it is installed.
In such a way, an air flow coming from the front part of said wind generator **100,** having impact on said blades **112a, 112b,** ..., forces said transmission axis **109** to a rotary motion and therefore forces the rotary element of the electric generator **102** to a rotary motion, generating therefore electric energy that can be immediately transmitted to an electric engine and/or other devices belonging to the transportation means, otherwise the electric energy can be saved into said accumulators.

The air conveyor **101** has a cylindrical shape empty inside, and it has a front opening having a diameter that is larger in respect to the rear opening, therefore the air conveyor **101** presents a cone-shaped lateral surface, having a profile decreasing in size from the front part to the rear part. The wind blades **112a, 112b,** ..., have their outer profile bended towards the inside of the turbine **107,** with their rotary motion create a path for the air entering into the generator **100** that rotate on itself as a spiral in the longitudinal direction.

In such a way, the air flowing as a spiral, inside the generator **100,** bounded by the lateral surface of the air conveyor **107,** going ahead on its path it is pressed along smaller spaces, increasing the inner pressure and therefore the force on the wind blades **112a, 112b,** ..., activating the rotary motion of the transmission axis **109,** leading to a higher power produced by the electric generator **102.**

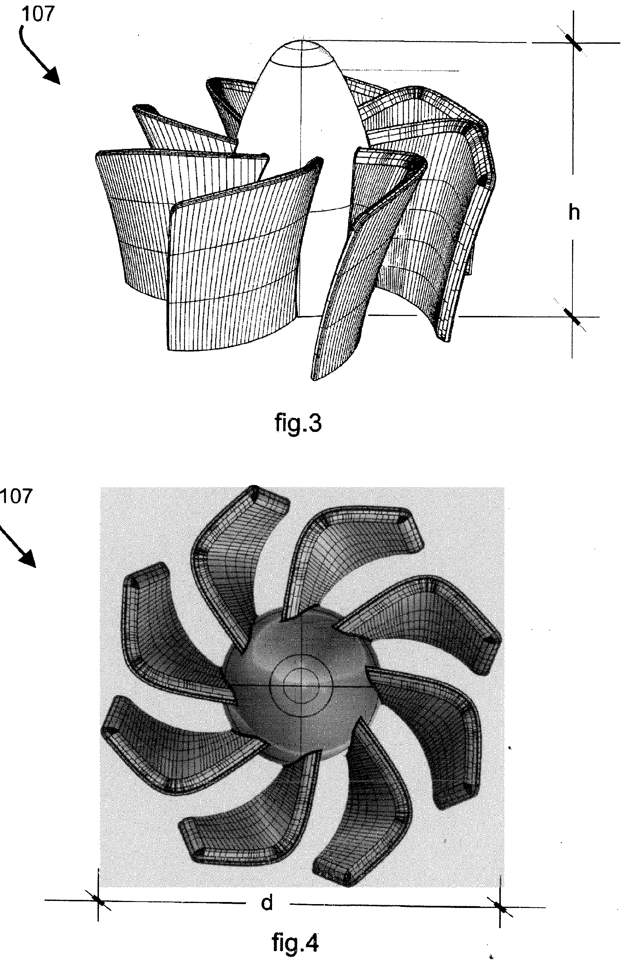

With reference to **Figures 3 and 4****,** it is shown that said wind blades **112a, 112b,** ..., are bent, shaped and welded to said ogive **116,** and they have a helical convex shape with the external profile inclined towards the inside of the turbine **107.**

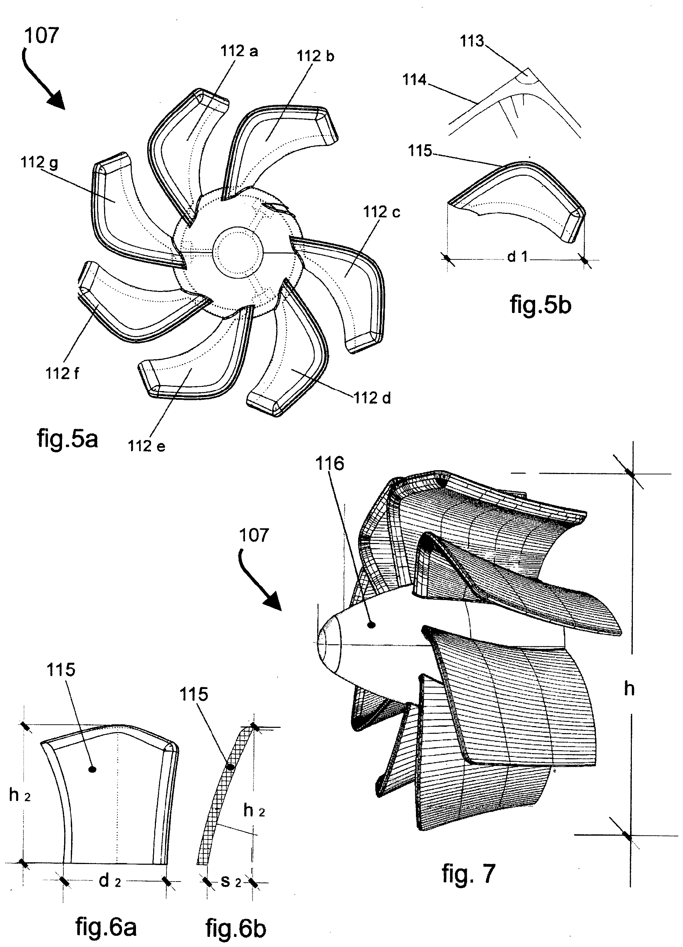

With reference to **Figures 5a, 5b, 6a, 6b and 7****,** it is shown that said wind turbine **107** is composed of: a central union ogive **116** having height of 107.49 mm; on the ogive **116** a group of blades **112a, 112b,** ..., of a minimum number of 8, are welded; inside turbine **107,** the height of the wind blades **112a, 112b,** ..., is 76.30 mm, and the front diameter is 189.20 mm.

Each of said wind blades **112a, 112b,** ..., of the turbine **107** has a helix convex shape, with a rectangular cross-section; the height of each wind blade can be in the range between 57.00 mm and 74.44 mm. The bend or maximum inclination of the superior blade is 95.25 degrees, instead the inferior inclination is of 126.86 degrees. The blade generates a distance of approximately 24.57 mm, along the bending profile, in respect to its longitudinal axis. The blade presents an inner and outer surface that is smooth. The larger and smaller sides of the rectangular surface of the blade, that are orientated towards the outer of the turbine, have an inclination going from the outside to the inside of the turbine, in order to better catch the air; the blades are welded to the ogive through a welding connection.

The wind generator **100** could further comprise: a cycles multiplier installed at the rotary axis **109** that connects the rotor of the electric generator **102.** The above said wind turbine **107** is made of different possible materials, as: metal, carbon, plastic, or modern polymers. The wind generator **100** can further comprise sequential alternators and/or could include a three-phases alternator for heavy transportation means.

The wind generator **100** could be installed according to different configurations and systems for housing and positioning on the outer surfaces of the transportation means: front positioning, or lateral positioning, on the upper part, on the lower part, protruding in respect to the surface, or contained into the surface as an air opening.

The wind generator **100** could be installed in electric transportation means, where said transportation means would be represented by road vehicles, rail vehicles, water vehicles or air vehicles.

Said wind turbine **107** can be oriented, positioned and installed at the outer front or lateral surface of transportation means, being directed mainly to the direction of the incoming friction air, by using specific supporting means.

Therefore, the above examples show that the present invention reaches all the expected objectives. In particular, it permits to achieve a wind generator for transformation of kinetic energy of an air flow, moving in respect to the outer surface of transportation means, to kinetic energy of a rotating wind turbine having a horizontal axis, leading to a consequent transformation of kinetic energy to electric energy, by using an electric generator; the energy produced is available either to save electric energy (in batteries) and to provide propulsion of means (electric engines).

Further according to the invention, the device is composed of an innovative combination of:
- some elements that are known from the state of the art, being of common use on the market: air conveyor or shell; ogive; electric generator; electric accumulator; electric connecting cables; anchorage supports,
- and innovative and original elements: air conveyor comprising oval-shaped nozzles; turbine having a rotary horizontal axis; an innovative shape and conformation of the wind turbine blades; their innovative combination.

Furthermore, the device achieves the generation of a constant, continuous and potentially unlimited energy; the impact of air on the turbine that has been properly installed on the outer surface of the transportation mean (car vehicle, motor vehicle, bicycle, rail vehicle, water vehicle, air vehicle, etc.), by penetration of air into the air conveyor, causes a rotary motion of the turbine blades, producing a constant kinetic energy, that is transmitted to an electric generator, installed at the rear part of the general device.

Then, according to the invention, it is avoided the problem of interruption, discontinuity and insufficient production of energy, considering that the constant friction of air generated by the vehicle in motion activates the turbine according to a force that is proportional to the speed of the vehicle, and at the same time permits to achieve a significant energetic autonomy, either in propulsion and for other electric and/or electronic systems necessary for a proper functioning;
Finally, according to the invention, the turbine presents a particular design and shape, and a strength of materials used to be constructed, so that to achieve a generation of kinetic energy as an effect of the rotary motion of the blades; in fact the efficiency of energy production in the wind generator depends on the characteristics in the turbine and, in particular, on the technical specifications of the blades belonging to the same turbine.

The present invention has been described by making reference to some non limiting examples and following some preferred embodiments; however it goes without saying that modifications and/or changes are possible. In example in the wind generator it is possible to change the geometrical shape, size and weight, of the whole object and/or its single components; either the wind generator and the turbine can be made of different types of material; the wind generator can be installed at different points and positions, having different configurations and on different surfaces and/or structures of the vehicle; size and shape of the turbine blades can change in size and material; the wind generator can be built including or not the electric generator; the wind generator can be built with or without power supply. Therefore, modifications and/or changes could be introduced by those skilled in the art without departing from the relevant scope, as defined in the enclosed claims.

## Claims

1. An electric transportation means comprising a wind generator (100) having a horizontal axis, said wind generator (100) further comprising:
- an air conveyor (101), having a cylindrical shape that is empty inside, having oval-shaped nozzles (104a, 104b, ...) on the outer surface;
- a horizontal wind turbine (107), comprising a rotary group of wind blades (112a, 112b, ...) fixed to a union ogive (116);
- a transmission axis (109), being rotating and horizontal, where said turbine (107) is installed with its respective ogive (116) placed at the front part of said axis (109) and where an electric generator (102) is installed at the rear part of said axis (109), through a rotary element of said electric generator (102), so that a rotation of turbine (107) is transmitted, through a rotation of axis (109), to the rotary element of the electric generator (102);
- said electric generator (102), comprising said rotary element and a fixed element, that is connected to the wind turbine (107) through the transmission axis (109); the electric generator (102) is further connected, by using electric cables (105), to some external electric accumulators;
- at least two ball bearings (108, 111) anchoring, through connection elements, said rotary transmission axis (109) together either with the wind turbine (107) and the electric generator (102), in a stable position inside said air conveyor (101), at the same time allowing the rotary motion of said rotating axis (109) on itself;
- a cover (103) closing the rear part of said air conveyor (101);
- at least two supporting elements (106, 110) placed on the outer surface of said air conveyor (101), in order to achieve an anchorage of the wind generator (100) to the transportation means on which it is installed,
so that an air flow coming from the front part of said wind generator (100), having impact on said blades (112a, 112b, ...), forces said transmission axis (109) to a rotary motion and therefore forces the rotary element of the electric generator (102) to a rotary motion, generating therefore electric energy that can be immediately transmitted to an electric engine and/or other devices belonging to the transportation means, otherwise the electric energy can be saved into said accumulators,
**characterized in that**:
- said wind blades (112a, 112b, ...) are bent, shaped and welded to said ogive (116), and they have a helical convex shape with the external profile inclined towards the inside of the turbine (107).

2. An electric transportation means comprising a wind generator (100) having a horizontal axis, according to previous claim 1, **characterized in that**:
- said air conveyor (101) has a cylindrical shape empty inside, and it has a front opening having a diameter that is larger in respect to the rear opening, therefore the air conveyor (101) presents a cone-shaped lateral surface, having a profile decreasing in size from the front part to the rear part; the wind blades (112a, 112b, ...), having their outer profile bended towards the inside of the turbine (107), with their rotary motion create a path for the air entering into the generator (100) and rotate on itself as a spiral in the longitudinal direction,
so that the air flowing as a spiral, inside the generator (100), bounded by the lateral surface of the air conveyor (107), going ahead on its path it is pressed along smaller spaces, increasing the inner pressure and therefore the force on the wind blades (112a, 112b, ...) activating the rotary motion of the transmission axis (109), leading to a higher power produced by the electric generator (102).

3. An electric transportation means comprising a wind generator (100) having a horizontal axis, according to one or more of previous claims, **characterized in that**:
- said air conveyor (101) includes said oval-shaped nozzles (104a, 104b, ...) having a two dimensional shape that is elliptical and three dimensional conic, that can have different number and size, and can be placed in different positions according to specific needs; inside the conveyor (101), approximately in the middle of its cylindric surface, an element is installed, having 8 arms, that supports a central cylinder, inside which said horizontal rotary axis (109) with turbine (107) is installed.

4. An electric transportation means comprising a wind generator (100) having a horizontal axis, according to one or more of previous claims, **characterized in that**:
- said wind turbine (107) is composed of: a central union ogive (116) having height of 107.49 mm; on the ogive (116) a group of blades (112a, 112b, ...), of a minimum number of 8, are welded; inside turbine (107), the height of the wind blades (112a, 112b, ...) is 76.30 mm, and the front diameter is 189.20 mm.

5. An electric transportation means comprising a wind generator (100) having a horizontal axis, according to one or more of previous claims, **characterized in that**:
- each of said wind blades (112a, 112b, ...) of the turbine (107) has a helix convex shape, with a rectangular cross-section; the height of each wind blade can be in the range between 57.00 mm and 74.44 mm; the bend or maximum inclination of the superior blade is 95.25 degrees, instead the inferior inclination is of 126.86 degrees; the blade generates a distance of approximately 24.57 mm, along the bending profile, in respect to its longitudinal axis; the blade presents an inner and outer surface that is smooth; the larger and smaller sides of the rectangular surface of the blade, that are orientated towards the outer of the turbine, have an inclination going from the outside to the inside of the turbine, in order to better catch the air; the blades are welded to the ogive through a welding connection.

6. An electric transportation means comprising a wind generator (100) having a horizontal axis, according to one or more of previous claims, **characterized in that** said wind generator (100) further comprising:
- a cycles multiplier installed at the rotary axis (109) that connects the rotor of the electric generator (102).

7. An electric transportation means comprising a wind generator (100) having a horizontal axis, according to one or more of previous claims, **characterized in that**:
- said wind turbine (107) is made of different possible materials, as: metal, carbon, plastic, or modern polymers.

8. An electric transportation means comprising a wind generator (100) having a horizontal axis, according to one or more of previous claims, **characterized in that**:
- the wind generator (100) having horizontal axis comprises sequential alternators and/or includes a three-phases alternator for heavy transportation means.

9. An electric transportation means comprising a wind generator (100) having a horizontal axis, according to one or more of previous claims, **characterized in that**:
- the wind generator (100) having horizontal axis is installed according to different configurations and systems for housing and positioning on the outer surfaces of the transportation means: front positioning, or lateral positioning, on the upper part, on the lower part, protruding in respect to the surface, or contained into the surface as an air opening.

10. An electric transportation means comprising a wind generator (100) having a horizontal axis, according to one or more of previous claims, **characterized in that** said transportation means are represented by road vehicles, rail vehicles, water vehicles or air vehicles.

11. An electric transportation means comprising a wind generator (100) having a horizontal axis, according to one or more of previous claims, **characterized in that**:
- said wind turbine (107) can be oriented, positioned and installed at the outer front or lateral surface of transportation means, being directed mainly to the direction of the incoming friction air, by using specific supporting means.

## Patentansprüche

1. Elektrisches Transportmittel, umfassend einen Windgenerator (100) mit einer horizontalen Achse, wobei der Windgenerator (100) ferner umfasst:
- einen Luftförderer (101) von zylindrischer Form innerhalb des Hohlraums, der an der Außenfläche einige Belüftungsöffnungen (104a, 104b,...) von ovaler Form aufweist;
- eine horizontale Windkraftanlage (107), die eine rotierende Gruppe von Windkraftanlagen (112a, 112b,...) umfasst, die an einem Ogiv (116) befestigt sind;
- eine horizontale und rotierende Getriebewelle (109), in der die vorgenannte Turbine (107) mit dem jeweiligen Ogiv (116) am vorderen Ende der Welle (109) installiert ist, während ein elektrischer Generator (102) an der Welle installiert ist hinteres Ende der Welle (109), so dass eine Drehung der Turbine (107) durch eine Drehung der Welle (109) auf das Rotorelement des elektrischen Generators (102) übertragen wird;
- den vorgenannten elektrischen Generator (102), umfassend ein Rotorelement und ein Statorelement, die über die Übertragungsachse (109) mit der Windkraftanlage (107) verbunden sind; der elektrische Generator (102) ist auch über elektrische Kabel (105) mit externen elektrischen Akkumulatoren verbunden;
- mindestens zwei Kugellager (108, 111) zur Verankerung der vorgenannten rotierenden Übertragungsachse (109) durch feste Elemente zusammen mit der Windkraftanlage (107) und dem elektrischen Generator (102) in einer festen Position innerhalb der Luftförderer (101), der gleichzeitig die Drehung der vorgenannten Drehachse (109) auf sich selbst ermöglicht;
- eine hintere Verschlussabdeckung (103) des Luftförderers (101);
- mindestens zwei Stützen (106, 110), die an der Außenfläche des Gehäuses (101) positioniert sind, um die Verankerung des Windgenerators (100) an dem Transportmittel zu erreichen, auf dem er installiert ist;
derart, dass ein Luftstrom, der vom vorderen Teil des Windgenerators (100) kommt und von den Schaufeln (112a, 112b, ...) abgefangen wird, die Übertragungsachse (109) und damit das Rotorelement des elektrischer Generator (102), wodurch elektrische Energie erzeugt wird, die direkt vom Elektromotor und / oder von anderen Systemen des Transportmittels verwendet oder in den vorgenannten Akkumulatoren gespeichert werden kann;
**gekennzeichnet durch** die Tatsache, dass:
- Die vorgenannten Windblätter (112a, 112b,...) sind gebogen, geformt und mit dem Ogiv (116) verschweißt, haben eine spiralförmige konvexe Form und ein zur Innenseite der Turbine (107) geneigtes Außenprofil.

2. Elektrisches Transportmittel, umfassend einen Windgenerator (100) mit einer horizontalen Achse gemäß dem vorhergehenden Anspruch 1, **gekennzeichnet durch**:
- Der vorgenannte Luftförderer (101) hat innerhalb des Hohlraums eine zylindrische Form und eine vordere Öffnung mit einem größeren Durchmesser als die hintere Öffnung. Daher hat der Luftförderer (101) eine kegelförmige Seitenfläche mit einem sich verjüngenden Profil von vorne nach hinten; Die Windkraftanlagen (112a, 112b, ...) mit ihrem zur Innenseite der Turbine (107) geneigten Außenprofil bestimmen in ihrer Drehbewegung einen Luftweg, der in den Generator (100) eintritt und spiralförmig eingeschraubt wird die Längsrichtung,
derart, dass die spiralförmig gewickelte Luft innerhalb des Generators (100), die durch die Seitenfläche des Luftförderers (107) begrenzt ist, in ihrer Verschiebung zu engeren Räumen begrenzt ist, wodurch der Innendruck und damit die Kraft erhöht wird mit denen die Windkraftanlagen (112a, 112b,...) die Übertragungsachse (109) drehen, wodurch der elektrische Generator (102) eine größere Leistung liefert.

3. Ein elektrisches Transportmittel, umfassend einen Windgenerator (100) mit einer horizontalen Achse gemäß einem oder mehreren der vorhergehenden Ansprüche, **gekennzeichnet durch**:
- Der vorgenannte Luftförderer (101) hat die vorgenannten Belüftungsöffnungen (104a, 104b, ...) mit einer zweidimensionalen elliptischen und dreidimensionalen konischen Form, die verschiedene Anzahlen und Größen haben können und sich in verschiedenen befinden können Positionen nach Anforderungen; Innerhalb des Förderers (101) ist an etwa der Hälfte seiner zylindrischen Oberfläche ein Träger von 8 Armen angebracht, der einen zentralen Zylinder trägt, in dem die horizontale Drehachse (109) verläuft, mit der die Turbine (107) verbunden ist.

4. Ein elektrisches Transportmittel, umfassend einen Windgenerator (100) mit einer horizontalen Achse gemäß einem oder mehreren der vorhergehenden Ansprüche, **gekennzeichnet durch**:
- Die vorgenannte Windkraftanlage (107) besteht aus: Zentralanschluss (116) mit Abmessungen von 107,49 mm Höhe; Die Klingengruppe (112a, 112b,...) mit einer Mindestanzahl von 8 ist mit dem Ögiv (116) verschweißt. In der Turbine (107) beträgt die Höhe der Windkraftanlagen (112a, 112b,...) 76,30 mm, während der vordere Durchmesser 189,20 mm beträgt.

5. Ein elektrisches Transportmittel, umfassend einen Windgenerator (100) mit einer horizontalen Achse gemäß einem oder mehreren der vorhergehenden Ansprüche, **gekennzeichnet durch**:
- jede der Windkraftanlagen (112a, 112b,...) der Turbine (107) hat eine spiralförmige konvexe Form mit einer rechteckigen Form. in der Windkraftanlage kann die Länge von mindestens 57,00 mm bis maximal 75,44 mm variieren; die maximale Falte oder Neigung der oberen Klinge beträgt 95,25 Grad, während die untere Neigung 126,86 Grad beträgt. entlang der Biegekante erzeugt die Klinge ein konkaves Profil von etwa 24,57 mm in Bezug auf die gerade Breite der Klinge; die Klinge hat eine glatte Innen- und Außenfläche; die lange Seite und die kurze Seite der rechteckigen Oberfläche der Schaufel, die zur Außenseite der Turbine hin ausgerichtet sind, weisen eine Neigung auf, die von außen zur Innenseite der Turbine verläuft, um die Luft besser einfangen zu können. Die Klingen werden durch Schweißen mit dem Ogiv verschweißt.

6. Elektrisches Transportmittel, umfassend einen Windgenerator (100) mit einer horizontalen Achse gemäß einem oder mehreren der vorhergehenden Ansprüche, **gekennzeichnet dadurch, dass** es ferner umfasst:
- einen Drehzahlmultiplikator, der entsprechend der Drehachse (109) installiert ist und zum Rotor des elektrischen Generators (102) führt.

7. Ein elektrisches Transportmittel, umfassend einen Windgenerator (100) mit einer horizontalen Achse gemäß einem oder mehreren der vorhergehenden Ansprüche, **gekennzeichnet durch**:
- die oben genannte Windkraftanlage (107) wird unter Verwendung verschiedener Arten von Materialien hergestellt, wie zum Beispiel: Metall, Kohlenstoff, Kunststoffmaterial oder Polymere der neuesten Generation.

8. Ein elektrisches Transportmittel, umfassend einen Windgenerator (100) mit einer horizontalen Achse gemäß einem oder mehreren der vorhergehenden Ansprüche, **gekennzeichnet durch**:
- der Windgenerator mit horizontaler Achse (100) umfasst sequentielle Wechselstromgeneratoren und / oder ist mit einem Drehstromgenerator für große Transportmittel ausgestattet.

9. Ein elektrisches Transportmittel, umfassend einen Windgenerator (100) mit einer horizontalen Achse gemäß einem oder mehreren der vorhergehenden Ansprüche, **gekennzeichnet durch**:
- der Windgenerator (100) mit horizontaler Achse wird gemäß verschiedenen Konfigurationen und Gehäuse- und Positionierungssystemen in den Außenflächen des Transportmittels installiert: vorderes Gehäuse, Seite, oberer Teil, unterer Teil, aus der Oberfläche herausragend, eingebaut in die Oberfläche, ähnlich einer Entlüftung.

10. Elektrisches Transportmittel, umfassend einen Windgenerator (100) mit einer horizontalen Achse gemäß einem oder mehreren der vorhergehenden Ansprüche, wobei die vorgenannten Transportmittel aus Straßen-, Schienen-, Wasser- oder Luftfahrzeugen bestehen.

11. Ein elektrisches Transportmittel, umfassend einen Windgenerator (100) mit einer horizontalen Achse gemäß einem oder mehreren der vorhergehenden Ansprüche, **gekennzeichnet durch**:
- die vorgenannte Windkraftanlage (107) kann durch spezielle Verankerungsstützen im vorderen oder seitlichen Teil eines Transportmittels ausgerichtet, platziert und installiert werden, das hauptsächlich in Richtung der Ursprungsrichtung der Reibungsluft ausgerichtet ist.

## Revendications

1. Moyen de transport électrique comprenant un générateur éolien (100) ayant un axe horizontal, ledit générateur éolien (100) comprenant en outre:
- un convoyeur à air (101) de forme cylindrique à l'intérieur du creux, comportant sur la surface externe des ouvertures de ventilation (104a, 104b,...) de forme ovale;
- une éolienne horizontale (107), comprenant un groupe rotatif d'éoliennes (112a, 112b, ...) fixé sur une ogive (116);
- un arbre de transmission horizontal et rotatif (109), dans lequel la turbine susmentionnée (107) est installée avec l'ogive respective (116) à l'extrémité avant de l'arbre (109), tandis qu'un générateur électrique (102) est installé au niveau du extrémité arrière de l'arbre (109), de sorte qu'une rotation de la turbine (107) est transmise, par une rotation de l'arbre (109), à l'élément de rotor du générateur électrique (102);
- le générateur électrique précité (102), comprenant un élément rotor et un élément stator, relié à l'éolienne (107) par l'axe de transmission (109); le générateur électrique (102) est également connecté, par l'intermédiaire de câbles électriques (105), à des accumulateurs électriques externes;
- au moins deux roulements à billes (108, 111) pour ancrer, à travers des éléments fixes, de l'axe de transmission rotatif (109) précité, conjointement avec l'éolienne (107) et le générateur électrique (102), dans une position fixe à l'intérieur du convoyeur à air (101) permettant en même temps la rotation sur lui-même de l'axe de rotation précité (109);
- un couvercle de fermeture arrière (103) du convoyeur à air (101);
- au moins deux supports (106, 110) positionnés sur la surface externe du carter (101), pour obtenir l'ancrage de l'éolienne (100) au moyen de transport sur lequel il est installé, de telle sorte qu'un flux d'air provenant de la partie avant de l'éolienne (100), intercepté par les pales (112a, 112b, ...), fait tourner l'axe de transmission (109) et donc l'élément rotor du générateur électrique (102), générant ainsi de l'énergie électrique qui peut être utilisée directement par le moteur électrique et / ou par d'autres systèmes du moyen de transport, ou peut être stockée dans les accumulateurs précités,
**caractérisé par le fait que**:
- les pales d'éoliennes précitées (112a, 112b,...) sont pliées, conformées et soudées à l'ogive (116), ont une forme hélicoïdale convexe et un profil extérieur incliné vers l'intérieur de la turbine (107).

2. Moyen de transport électrique comprenant une éolienne (100) d'axe horizontal, selon la revendication 1 précédente, **caractérisé en ce que**:
- le convoyeur à air (101) susmentionné est de forme cylindrique à l'intérieur du creux, ayant une ouverture avant de plus grand diamètre que l'ouverture arrière, et donc le convoyeur à air (101) a une surface latérale de type cône, avec un profil qui se rétrécit de l'avant vers l'arrière; les éoliennes (112a, 112b, ...), avec leur profil extérieur incliné vers l'intérieur de la turbine (107), déterminent dans leur mouvement de rotation un trajet de l'air entrant dans le générateur (100) qui est vissé en spirale dans la direction longitudinale,
de telle sorte que l'air enroulé en spirale, à l'intérieur du générateur (100), délimité par la surface latérale du convoyeur d'air (107), est confiné dans son déplacement vers des espaces plus étroits, augmentant la pression interne, et donc la force avec lesquels les éoliennes (112a, 112b,...) font tourner l'axe de transmission (109), avec par conséquent une plus grande puissance fournie par le générateur électrique (102).

3. Moyen de transport électrique comprenant une éolienne (100) ayant un axe horizontal, selon une ou plusieurs des revendications précédentes, **caractérisé en ce que**:
- le convoyeur à air (101) susmentionné présente les ouvertures de ventilation susmentionnées (104a, 104b, ...) de forme elliptique bidimensionnelle et conique tridimensionnelle, qui peuvent être de différents nombres et tailles, et peuvent être situées dans divers positions selon les besoins; à l'intérieur du convoyeur (101), à environ la moitié de sa surface cylindrique, est monté un support de 8 bras qui supporte un cylindre central, à l'intérieur duquel passe l'axe de rotation horizontal (109) auquel la turbine (107) est reliée.

4. Moyen de transport électrique comprenant une éolienne (100) ayant un axe horizontal, selon une ou plusieurs des revendications précédentes, **caractérisé en ce que**:
- l'éolienne (107) précitée est composée: d'une ogive centrale (116) de dimensions 107,49 mm de hauteur; le groupe d'aubes (112a, 11-2b,...) avec un nombre minimum de 8 est soudé à l'ogive (116); dans la turbine (107), la hauteur des éoliennes (112a, 112b, ...) est de 76,30 mm, tandis que le diamètre avant est de 189,20 mm.

5. Moyen de transport électrique comprenant une éolienne (100) ayant un axe horizontal, selon une ou plusieurs des revendications précédentes, **caractérisé en ce que**:
- chacune des éoliennes (112a, 112b,...) de la turbine (107) a une forme hélicoïdale convexe, de forme rectangulaire; dans l'éolienne, la longueur peut varier d'un minimum de 57,00 mm à un maximum de 75,44 mm; le pli ou l'inclinaison maximum de la lame supérieure est de 95,25 degrés, tandis que l'inclinaison inférieure est de 126,86 degrés; le long du bord de flexion, la lame génère un profil concave d'environ 24,57 mm par rapport à la ligne droite de largeur de la lame; la lame a une surface interne et externe lisse; le côté long et le côté court de la surface rectangulaire de l'aube, qui sont orientés vers l'extérieur de la turbine, ont une inclinaison qui va de l'extérieur vers l'intérieur de la turbine, afin de mieux capter l'air; les lames sont soudées à l'ogive au moyen d'une soudure.

6. Moyen de transport électrique comprenant une éolienne (100) d'axe horizontal, selon une ou plusieurs des revendications précédentes, **caractérisé en ce qu'**il comprend en outre:
- un multiplicateur de vitesse installé en correspondance avec l'axe de rotation (109) qui conduit au rotor du générateur électrique (102).

7. Moyen de transport électrique comprenant une éolienne (100) ayant un axe horizontal, selon une ou plusieurs des revendications précédentes, **caractérisé en ce que**:
- l'éolienne (107) précitée est réalisée à partir de différents types de matériaux, tels que par exemple: métal, carbone, matière plastique, ou polymères de dernière génération.

8. Moyen de transport électrique comprenant une éolienne (100) ayant un axe horizontal, selon une ou plusieurs des revendications précédentes, **caractérisé en ce que**:
- l'éolienne à axe horizontal (100) comprend des alternateurs séquentiels et / ou est équipée d'un alternateur triphasé pour des moyens de transport de grande taille.

9. Moyen de transport électrique comprenant une éolienne (100) ayant un axe horizontal, selon une ou plusieurs des revendications précédentes, **caractérisé en ce que**:
- l'éolienne (100) à axe horizontal est installée selon différentes configurations et systèmes de logement et de positionnement dans les surfaces externes du moyen de transport: boîtier avant, côté, partie supérieure, partie inférieure, dépassant de la surface, incorporé dans le surface, semblable à un évent.

10. Moyen de transport électrique comprenant une éolienne (100) ayant un axe horizontal, selon une ou plusieurs des revendications précédentes, dans lequel les moyens de transport susmentionnés sont constitués par des véhicules routiers, ferroviaires, fluviaux ou aériens.

11. Moyen de transport électrique comprenant une éolienne (100) ayant un axe horizontal, selon une ou plusieurs des revendications précédentes, **caractérisé en ce que**:
- l'éolienne (107) précitée peut être orientée, placée et installée dans la partie extérieure avant ou latérale d'un moyen de transport, principalement orientée vers la direction d'origine de l'air de friction, au travers de supports d'ancrage spécifiques.
